Europäisches Patentamt

European Patent Office

Office européen des brevets

(11) Publication number: **0 214 140**

**B1**

# EUROPEAN PATENT SPECIFICATION

(45) Date of publication of patent specification: 08.08.90

(51) Int. Cl.⁵: **A 01 J 11/00**

(21) Application number: **85903075.1**

(22) Date of filing: **28.05.85**

(86) International application number:
**PCT/SE85/00222**

(87) International publication number:
**WO 85/05536 19.12.85 Gazette 85/27**

(54) METHOD AND ARRANGEMENT FOR PRODUCTION OF A MILK CONCENTRATE.

(30) Priority: **01.06.84 SE 8402970**

(43) Date of publication of application:
**18.03.87 Bulletin 87/12**

(45) Publication of the grant of the patent:
**08.08.90 Bulletin 90/32**

(84) Designated Contracting States:
**DE FR GB NL**

(56) References cited:
**DE-B-1 153 203**
**SE-B- 374 989**
**SE-B- 386 565**
**SE-B- 399 632**
**SE-B- 427 322**
**SE-B- 435 217**
**SU-A- 749 371**

(73) Proprietor: **ALFA-LAVAL AGRI INTERNATIONAL AB**
**Farm Center P.O. Box 39**
**S-147 00 Tumba (SE)**

(72) Inventor: **LIDMAN, Magnus**
**Kärrhöksvägen 7**
**S-147 00 Tumba (SE)**

(74) Representative: **Lerwill, John et al**
**A.A. Thornton & Co. Northumberland House**
**303-306 High Holborn**
**London, WC1V 7LE (GB)**

Courier Press, Leamington Spa, England.

## Description

The present invention relates to a method for producing a milk concentrate by membrane filtration of milk obtained by milking, and to a milking plant including membrane filtration apparatus.

Concentration of milk by way of ultrafiltration is today an accepted procedure in dairies, for example in connection with production of cheese. Due to the fast development of cheaper and safer filter modules and membrane materials investigation has started into the possibility of carrying out the concentration of the milk, or at least a preconcentration of the milk, directly at the milking plant in order among other things to reduce the volumes which must be transported to dairies. In order to achieve a suitable membrane filtration process for this purpose a number of special requirements must be met. In order to obtain a milk product with a microbiologically high quality elaborate standards apply to the handling of milk on the farms which mean only a short period from milking until the milk is cooled to a temperature about 4°C. If a process for concentration of milk is introduced between the milking step and the cooling step it is essential to obtain as little increase as possible in the holding time of the milk in the very dangerous temperature range 37-20°C.

It is also desirable or in the future there will be a demand that a milk concentrate produced on the farm has a certain standardized degree of concentration in order to minimize the need for determination of the content when delivered to dairies so that only control samples have to be taken. The demand for a certain degree of concentration must also be seen against the background that any equipment for concentrating the milk on the farm must be simple to handle in order to be used by personnel without any specific education and the filtration plant must be so simple that the cost of the plant can be recovered by obtaining a higher price for the concentrated product in relation to unconcentrated milk.

One must also consider the quality of the milk in relation to the control equipment of the filtration plant. The quality of the milk depends on the mechanical treatment of the milk. A mechanical maltreatment of the milk may among other things destroy the protein membranes around the fat globules in the milk. That is the one reason for choosing careful control equipment.

If only the aim to obtain an easily controlled degree of concentration by using a simple apparatus is considered, a membrane filtration plant working batchwise is the most suitable. The milk is collected in a batch and is brought to circulate through the membrane filtration unit until the desired amount of permeate is removed. The remaining milk concentrate is transferred to a cooling tank. This method has, however, two evident drawbacks. Firstly, the treatment time is long, which of course influences the quality of the milk. Secondly, the whole amount of concentrate is transferred to the cooling tank in a very short time, which means that the holding time for the milk in the dangerous temperature range is prolonged. It should also be observed, that concentration of milk by way of ultrafiltration is performed at a temperature of 50-60°C, which in a batch procedure may mean that already cooled concentrate in the cooling tank together with a newly added amount reaches a mixing temperature within the dangerous range mentioned above. Flow control is normally exercised in combination with measuring of the concentration in conventional membrane filter plants which work continuously. The incoming flow is controlled in such a way that the filter units work with an optimal capacity. Apart from the fact that measurements made on the flow and on the concentration, which are usually carried out by refractometer, imply a relatively expensive control equipment, this usual control method within ultrafiltration techniques is very sensitive and must be performed by specially trained staff. Also, as the instantaneous production of milk may vary substantially during milking, depending on whether high milk yield or low milk yield animals are being milked at any given time, there is sometimes needed a capacity for intermediate storage of considerable amounts of milk in order to be able to filter the milk at a constant capacity. The alternative is to ensure the capacity of the filter unit can cope with the instantaneously produced milk flow.

The present invention has as its aim to achieve a method and an apparatus for membrane filtering of milk produced at a milking plant such that the problems mentioned above with a prolonged keeping time between the milking and the cold storage is eliminated while at the same time a certain determined degree of concentration is obtained by means of a simple and reliable apparatus.

Another aim of the invention is to achieve a method to control a membrane filter plant producing milk concentrate such that the capacity of the plant may easily be adapted to the instantaneously produced milk flow maintaining an exact degree of concentration without demanding the use of sensitive and expensive control apparatus as mentioned above.

In accordance with one aspect of the invention there is provided a method for producing a milk concentrate by membrane filtration of milk produced at a milking plant, characterised in that a milk flow produced by milking is led continuously and directly after milking to a membrane filter apparatus comprising at least one membrane filter unit, the milk flow being supplied to a concentrate space of a membrane filter unit, and the degree of concentration of the milk concentrate obtained from the filter apparatus is determined by two positive pumps being arranged to work at a constant relative capacity and each being arranged to control a respective flow chosen from the milk flow led to the filter assembly, the flow of milk concentrate obtained from the filter apparatus, and the flow of permeate obtained from the filter apparatus.

In the method of the invention the milk to be concentrated may possibly be heated to a temperature of 50-70°C before being led to the membrane filtration apparatus.

In accordance with a second aspect the present invention provides a milking plant comprising membrane filter apparatus including at least one filter unit with a permeate space and a concentrate space separated by a membrane, an inlet to the concentrate space for a flow of milk to be concentrated, an outlet from the concentrate space for a flow of milk concentrate, a circulation pipe connecting said outlet to said inlet to the concentrate space, an outlet from the permeate space for a permeate flow, and a circulation pump in said circulation pipe, characterised in that two positive pumps are provided and each pump is arranged to control a respective flow chosen from the flow of milk to be concentrated to the membrane filter apparatus, the flow of milk concentrate from the filter apparatus and the flow of permeate from the filter apparatus, the two positive pumps having a common driving system so that the pumps work at a constant relative capacity, and said common driving system is arranged to be adjusted in accordance with the milk flow produced by milking whereby the capacity of the at least one filter unit is adjusted due to the pressure across the membrane being dependent on the capacity of the said pumps.

By the invention there is achieved a particularly simple control of the milk concentration by coordinating two positive pumps, each of which controls one flow, to produce flows which have a certain relation to each other. The co-ordination usually takes place mechanically by way of a common driving shaft or driving mechanism, but other forms of synchronization are possible. Bearing in mind that the filter plant should be operated by usual milking personnel without the risk of variations in concentration in the concentrated milk produced, controlling the ratio by means of two positive pumps constitutes a very robust and particularly reliable solution.

For the special purpose of adjusting the capacity of the filtration unit to suit the instantaneous production of milk, the control of the ration between the two flows by way of two positive pumps constitutes a simple and advantageous solution in that the control of the load of the filter unit may be carried out without changing the predetermined relation of capacity of the two pumps. The total capacity of the pumps may be varied by way of a common driving system, for example by changing the rotation speed of the pumps, frequency of the strokes, or the volume of the strokes, and thus the capacity adjusted to the amount of milk arriving without changing the relative capacity of the pumps. The total capacity of the pumps may easily be controlled by the level in a storage tank for produced milk. The method of control also implies a careful treatment of the milk in that the need for flow regulating throttle valves is eliminated. The control of the total capacity of the two pumps may in a simpler arrangement according to the invention be effected manually for example by adjusting the rotation speed of the pumps with a mechanical variator or a similar means. Such a simple control may be sufficient in milking plants where the variation in the produced amount of milk is mainly of a seasonal character, for example when the main number of animals are in the same lactation period. Anyhow, an automatic means for shutting off the filter plant or for sending an alarm signal can be provided and be arranged to be actuated when the milk in a storage tank prior to the filter apparatus is below a certain level.

When according to the invention two positive pumps are arranged to control two of the three flows chosen the incoming flow of milk to be concentrated, the outgoing concentrate flow and the outgoing permeate flow, it is seen that three separate alternatives are possible. A first alternative is to control the incoming milk flow and the outgoing permeate flow, a second alternative is to control the incoming milk flow and the outgoing concentrate flow, and a third alternative is to control the outgoing concentrate flow and the outgoing permeate flow. Of these three alternatives the first two mentioned are preferred, and will be described in more detail in connection with some specific embodiments and with reference to the accompanying drawings, wherein:-

Fig. 1 shows a flow chart of a membrane filter plant, in which two positive pumps control arriving milk flow and outgoing permeate flow,

Fig. 2 shows a flow chart of a plant with two filter units connected in series and with the same location of the two positive pumps as in Fig. 1,

Fig. 3 shows a modified embodiment of the plant in Fig. 1 with the same location of the two positive pumps,

Fig. 4 shows a filter plant, in which the two positive pumps control the arriving milk flow and the outgoing concentrate flow,

Fig. 5 shows a plant with two filter units connected in series, and with the same location of the two positive pumps as in Fig. 4, and

Fig. 6 shows a modification of the plant according to Fig. 4 with the same location of the two positive pumps.

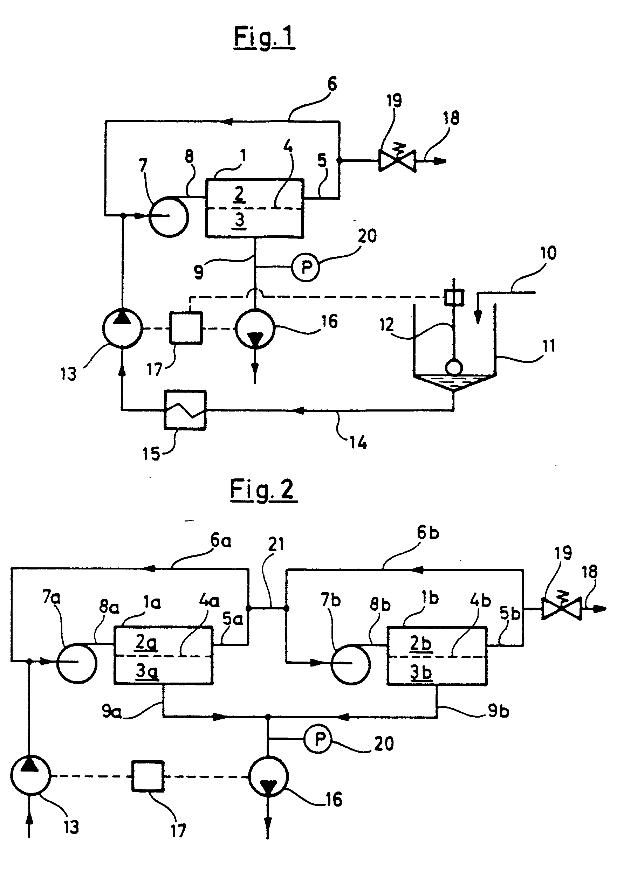

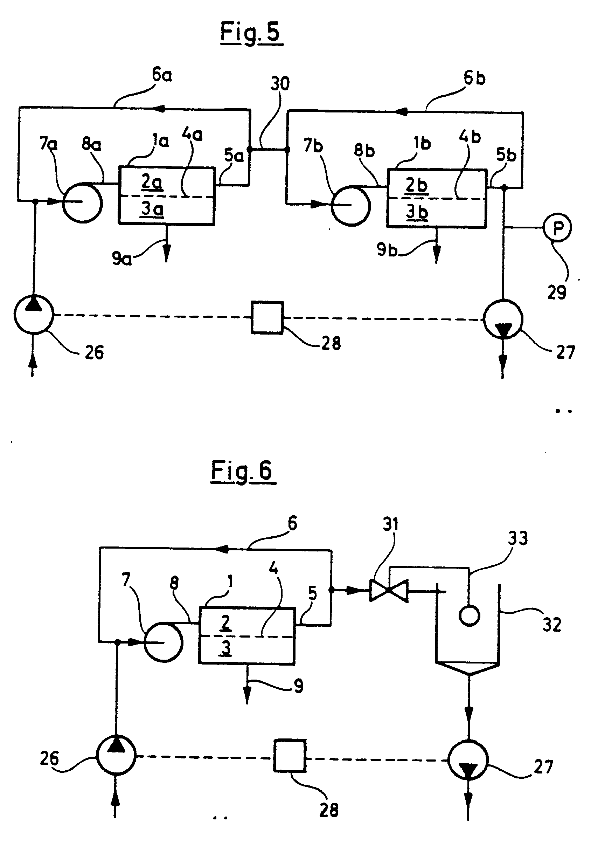

In all of Figures 1-6 there is a membrane filter unit 1 with a concentrate space 2 and a permeate space 3 separated by a membrane 4. From an outlet 5 from the concentrate space 2 a recirculation pipe 6 leads by way of a circulation pump 7 to an inlet 8 to the concentrate space 2. The permeate space 3 is provided with a permeate outlet 9. In Fig. 2 and Fig. 5, which show plants with two filter units connected in series, the corresponding reference numerals in the first filter units have been given the addition a and the corresponding reference numerals in the second filter unit have been given the addition b.

In the plant shown in Fig. 1 milk produced in the milking plant flows by way of a pipe 10 to a storage tank 11 provided with a level sensor 12. Milk flow to the filter unit 1 is controlled by a first positive pump 13, which pumps milk from the storage tank 11 by way of a pipe 14 and a heat exchanger 15, in which the milk is heated to a temperature suitable for the membrane filtration, usually in the range of 50-70°C. A second positive pump 16 controls the permeate flow from the permeate space 3 through the permeate outlet 9. The two positive pumps 13 and 16 are driven by a common driving system 17 in such a way that they work at a constant relative capacity. The driving unit 17 may suitably comprise an electrical motor, which is connected to a common driving shaft for the two positive pumps. The capacity of the pumps 13 and 16 is controlled by the level sensor 12 in the storage tank 11, for example by varying the rotation speed of the motor.

In order to hinder leakage by way of the pump 13 and an outlet pipe 18 from the concentrate space 2 a pressure control valve 19 is arranged in the pipe 18. In order to monitor the capacity and condition of the filter membrane 4 a pressure sensing means 20 is arranged between the permeate outlet 9 and the positive pump 16. When the capacity of the filter is exceeded, for example, and the membrane starts to block up, the pressure in the permeate space diminishes, which is registered by the pressure sensing means 20, which may be a manometer or a pressure switch. The pressure sensing means 20 may be arranged to control and reduce the capacity of the pumps 13 and 16 by way of the common control system 17.

Fig. 2 shows another embodiment of the plant in Fig. 1 with two filter units 1a and 1b connected in series. The connection in series of the two filter units 1a and 1b takes place by way of a connection pipe 21 between the recirculation pipe 6a of the unit 1a and the recirculation pipe 6b of the unit 1b. The positive pumps 13 and 16 with the common driving means 17, the pressure control valve 19 and the pressure sensing means 20 have the same principal position and function as in the plant according to Fig. 1 and have been given the same reference numerals. The positive pump 16 is however connected to the outlet for permeate 9a from the filter unit 1a and to the outlet for permeate 9b from the filter unit 1b.

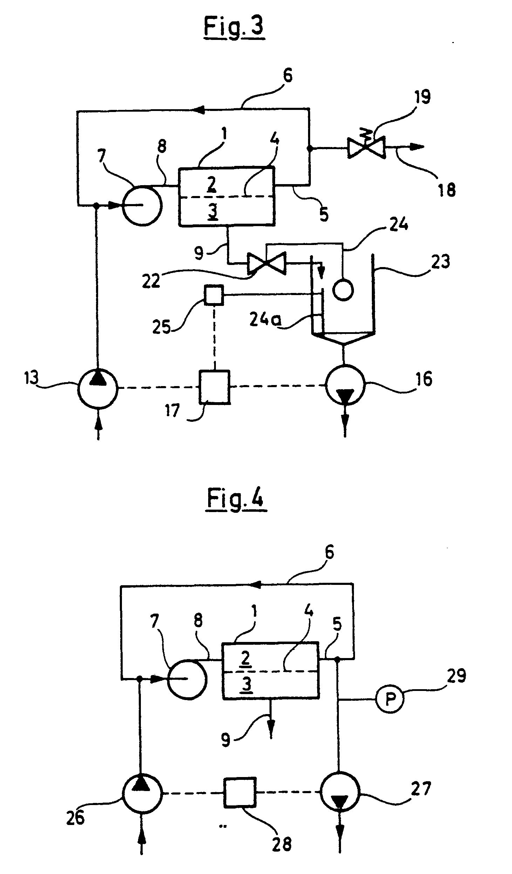

Fig. 3 shows a modification of the plant according to Fig. 1 and differs from the same in that the outlet 9 from the permeate space 3 leads by way of a valve means 22 to a container 23 with a level sensor 24 which opens and closes the valve means 22, and in that the positive pump 16 which controls the flow of permeate is arranged to continuously lead away permeate from the container 23. In order to control the maximum capacity and condition of the filter membrane 4 a second level sensing means 24a is arranged in the container 23. When the positive pump 16 has pumped out a larger flow of permeate than the filter unit 1 may produce, the level in the container 23 sinks under the control field of the level sensor 24. It is then the task of the level sensor 24a to give alarm or adapt the total capacity of the pumps 13 and 16. Such adaption may for example be achieved in that the pressure sensor 20 by way of a tyristor 25 or some other signal modifier is arranged to influence the common driving system 17 of the pumps 13 and 16 in order to reduce the total capacity of the pumps.

In the flow chart shown in Fig. 4 a first positive pump 26 is arranged to control the milk flow to the filter unit 1, while a second positive pump 27 is arranged to control the outgoing flow of concentrate from the concentrate space 2. The common driving means for the pumps 26 and 27 has the numeral 28. In this case the outlet 9 of permeate opens at atmospheric pressure whereas the monitoring of the capacity and condition of the filter membrane 4 in this case suitably takes place by means of a pressure sensing means 29 in the concentrate space 2. If the filter capacity does not correspond to the capacity of the pumps 26 and 27, the pressure on the concentrate space 2 rises, and the pressure sensing means 29 is connected to an alarm means or a switch. The pressure sensing means 29 may also be arranged to influence the common driving means 28 of the pumps 26 and 27 at a certain pressure such that the capacity of the pumps is reduced.

Fig. 5 shows the same plant as in Fig. 4 with the exception that two filter units 1a and 1b connected in series are included. The two filter units are connected in series in that the circulation pipe 6a for the filter unit 1a is connected to the circulation pipe 6b for the filter unit 1b by way of a pipe 30. The positive pump 27 which leads concentrate away from the plant, is connected to the outlet 5b of concentrate from the second filter unit 1b.

Fig. 6 shows a modification of the plant in Fig. 4. The modification consists in that the outlet from the concentrate space 2 leads by way of a valve means 31 to a container 32 with a level sensor 33 which opens and closes the valve means 31, and in that the positive pump 27 which controls the flow of concentrate is arranged to lead continuously away concentrate from the container 32. This embodiment has the advantage that the pressure at the inlet of the pump 27 is constant. The pump can therefore work at constant pressure conditions since the counter pressure also can be held constant, and a good exact determination may be obtained in that the internal leakage of the pump is constant. This advantage is present alsoin the embodiment of Fig. 3.

## Claims

1. Method for producing a milk concentrate by membrane filtration of milk produced at a milking plant, characterised in that a milk flow (10) produced by milking is led continuously and directly after milking to a membrane filter apparatus comprising at least one membrane filter unit (1), the milk flow being supplied to a concentrate space (2) of a membrane filter unit (1), and the degree of concentration of the milk concentrate obtained from the filter apparatus is determined by two positive pumps (13, 16) being arranged to work at a constant relative capacity and each being arranged to control a respective flow chosen from the milk flow led to the filter assembly, the flow of milk concentrate obtained from the filter apparatus, and the flow of permeate obtained from the filter apparatus.

2. Method according to claim 1, wherein the capacity of the said two positive pumps (13, 16) is adjusted in relation to the milk flow produced by milking whereby the capacity of the at least one membrane filter unit adjusted accordingly due to the driving pressure across the filter membrane being dependent on the capacity ofthe pumps.

3. A milking plant comprising membrane filter apparatus including at least one filter unit (11) with a permeate space (3) and a concentrate space (2) separated by a membrane (4), an inlet (8) to the concentrate space for a flow of milk to be concentrated, an outlet (5) from the concentrate space for a flow of milk concentrate, a circulation pipe (6) connecting said outlet (5) to said inlet (8) to the concentrate space (2), an outlet (9) from the permeate space (3) for a permeate flow, and a circulation pump (7) in said circulation pipe, characterised in that two positive pumps (13, 16) are provided and each pump is arranged to control a respective flow chosen from the flow of milk to be concentrated to the membrane filter apparatus, the flow of milk concentrate from the filter apparatus and the flow of permeate from the filter apparatus, the two positive pumps (13, 16) having a common driving system (17) so that the pumps work at a constant relative capacity, and said common driving system (17) is arranged to be adjusted in accordance with the milk flow (10) produced by milking whereby the capacity of the at least one filter unit (1) is adjusted due to the pressure across the membrane (2) being dependent on the capacity of the said pumps (13, 16).

4. A plant according to claim 3, wherein one of said positive pumps (13) is arranged to control the milk flow to the membrane filter apparatus, the other positive pump (16) is arranged to control the flow of permeate from the filter apparatus, and a pressure controlling valve (19) is arranged at an outlet (18) for milk concentrate for opening said outlet when the milk concentrate reaches a certain pressure.

5. A plant according to claim 4, wherein a pressure sensing means (20) is arranged to sense the pressure in the permeate space (3) of the or each filter unit for ensuring that the maximum capacity of the filter unit is not exceeded.

6. A plant according to claim 4, wherein the outlet (9) from the permeate space (3) of said at least one filter unit is connected through a valve means (22) to a container (23) with a level sensor (24) arranged to control opening and closing of said valve means (22), and said other positive pump (16) which controls the permeate flow is arranged to lead permeate continuously away from the said container (23).

7. A plant according to claim 6, wherein said container (23) is provided with a level sensor (24) arranged to control the said common driving system (17) to reduce the capacity of the positive pumps (13, 16) when the permeate in the container (23) is under a certain level.

8. A plant according to claim 3, wherein one of the positive pumps (26) controls the flow of milk to be concentrated to the filter apparatus, the other positive pump (27) controls the flow of milk concentrate from the filter apparatus, and a pressure sensing means (29) is arranged to sense the pressure of milk concentrate in the filter apparatus for ensuring that the maximum capacity of the or each filter unit (1) is not exceeded.

9. A plant according to claim 3, wherein one of the positive pumps (26) controls the flow of milk to be concentrated to the filter apparatus, the other pump (27) controls the flow of milk concentrate from the filter apparatus, an outlet for milk concentrate is connected through a valve means (31) to a container (32) with a level sensor (33) arranged to control opening and closing of said valve means (31), and the said other positive pump (27) which controls the flow of milk concentrate is arranged to lead milk concentrate continuously away from said container (32).

**Patentansprüche**

1. Verfahren zur Herstellung eines Milchkonzentrats durch Membranfiltration von in einer Melkanlage produzierter Milch, dadurch gekennzeichnet, daß ein durch Melken produzierter Milchstrom (10) stetig und direkt nach dem Melken einem Membranfilterapparat mit mindestens einer Membranfiltereinheit (1) zugeführt wird, wobei der Milchstrom einem Konzentratraum (2) der Membranfiltereinheit (1) zugeführt wird und der Konzentrationsgrad des von dem Filterapparat erhaltenen Milchkonzentrats bestimmt wird durch zwei positive (Verdrängungs-)Pumpen (13, 16), die bei einer konstanten relativen Kapazität zu arbeiten eingerichtet sind und jede dazu eingerichtet ist, jeweils einen Strom zu kontrollieren, der ausgewählt wird aus dem zur Filteranordnung geleiteten Milchstrom, aus dem von dem Filterapparat erhaltenen Strom des Milchkonzentrats und aus dem von dem Filterapparat erhaltenen Permeatstrom.

2. Verfahren nach Anspruch 1, bei dem die Kapazität der zwei positiven (Verdrängungs-)Pumpen (13, 16) eingestellt wird im Verhältnis zu dem durch das Melken erzeugten Milchstrom, wodurch die Kapazität der wenigstens einen Membranfiltereinheit entsprechend eingestellt wird infolge des Antriebsdruckes an der Filtermembran, der abhängt von der Kapazität der Pumpen.

3. Melkanlage mit einem Membranfilterapparat mit mindestens einer Filtereinheit (1) mit einem Permeatraum (3) und einem davon durch eine Menbran (4) getrennten Konzentratraum (2), einem Einlaß (8) zum Konzentratraum für einen zu konzentrierenden Milchstrom, einem Auslaß (5) aus dem Konzentratraum für einen Milchkonzentratstrom, einer Umlaufleitung (6), die den Auslaß (5) mit dem Einlaß (8) zum Konzentratraum (2) verbindet, einem Auslaß (9) vom Permeatraum (3) für einen permeatstrom und einer Umlaufpumpe in der Umlaufleitung (7), dadurch gekennzeichnet, daß zwei positive (Verdrängungs-)Pumpen (13, 16) vorgesehen sind und jede Pumpe zum Steuern eines Stroms eingerichtet ist, der ausgewählt wird aus dem zu konzentrierenden Milchstrom zum Membranfilterapparat, aus dem Strom des Milchkonzentrats aus dem Filterapparat und aus dem Permeatstrom aus dem Filterapparat, wobei die beiden positiven (Verdrängungs-)Pumpen (13, 16) ein gemeinsames Antriebssystem (17) aufweisen, so daß sie mit konstanter relativer Kapazität arbeiten, und wobei das gemeinsame Antriebssystem (17) entsprechend dem beim Melken erzeugten Milchstrom (10) verstellbar angeordnet ist, wodurch die Kapazität der mindestens einen Filtereinheit (1) aufgrund des Drucks an der Membran (2) eingestellt wird, welcher von der Kapazität der Pumpen (13, 16) abhängt.

4. Anlage nach Anspruch 3, in der die eine (13) der positiven (Verdrängungs-)Pumpen zum Steuern des Milchstroms zum Membranfilterapparat und die andere positive (Verdrängungs-)Pumpe (16) zum Steuern der Permeatströmung aus dem Filterapparat angeordnet sind, wobei ein Druckkontrollventil (19) an einem Auslaß (18) für das Milchkonzentrat angeordnet ist, um diesen zu öffnen, wenn das Milchkonzentrat einen bestimmten Druck erreicht.

5. Anlage nach Anspruch 4, in der ein Druckfühler (20) zum Abfühlen des Druckes im Permeatraum (3) der bzw. jeder Filtereinheit angeordnet ist, um zu gewährleisten, daß die maximale Kapazität der Filtereinheit nicht überschritten wird.

6. Anlage nach Anspruch 4, in der der Auslaß (9) aus dem Permeatraum (3) der mindestens einen Filtereinheit über eine Ventileinrichtung (22) mit einem Behälter (23) verbunden ist, der einen Füllstandsmelder (24) aufweist, der zum Steuern des Öffnens und Schließens der Ventileinrichtung (22) angeordnet ist, und in der die den Permeatstrom steuernde andere positive (Verdrängungs-)Pumpe (16) zum kontinuierlichen Abführen des Permeats vom Behälter (23) eingerichtet ist.

7. Anlage nach Anspruch 6, in der der Behälter (23) mit einem Füllstandsmelder (24) versehen ist, der zum Steuern des gemeinsamen Antriebssystems (17) angeordnet ist, um die Kapazität der positiven (Verdrängungs-)Pumpen (13, 16) zu verringern, wenn das Permeat im Behälter (23) unter einem bestimmten Niveau ist.

8. Anlage nach Anspruch 3, in der eine (26) der positiven (Verdrängungs-)Pumpen den Strom zu konzentrierender Milch zum Filterapparat kontrolliert und die andere (27) positive (Verdrängungs-)Pumpe den Strom des Milchkonzentrats aus dem Filterapparat kontrolliert und ein Druckfühler (29) den Druck des Milchkonzentrats in dem Filterapparat erfaßt, um zu gewährleisten, daß die Höchstkapazität der bzw. jeder Filtereinheit (1) nicht überschritten wird.

9. Anlage nach Anspruch 3, in der eine (26) der positiven (Verdrängungs-)Pumpen den Strom zu konzentrierender Milch zum Filterapparat kontrolliert und die andere (27) positive (Verdrängungs-)Pumpe den Strom des Milchkonzentrats aus dem Filterapparat kontrolliert, in der ein Auslaß für das Milchkonzentrat über eine Ventileinrichtung (31) mit einem Behälter (32) verbunden ist, der einen Füllstandsmelder (33) aufweist, der das Öffnen und Schließen der Ventileinrichtung (31) kontrolliert, und in der die den Strom des Milchkonzentrats steuernde andere (27) positive (Verdrägnungs-)Pumpe zum kontinuierlichen Abführen des Milchkonzentrates vom Behälter (32) eingerichtet ist.

**Revendications**

1. Procédé pour produire un concentré de lait par filtration par une membrane du lait produit dans une installation de traite, caractérisé en ce qu'un flux de lait (10) produit par la traite est dirigé de façon continue et directement après la traite vers un appareil de filtration à membrane comprenant au moins une unité de filtration à membrane (1), le flux de lait étant envoyé dans un espace à concentré (2) d'une unité de filtration à membrane (1), et le degré de concentration du concentré de lait obtenu par l'appareil de filtration est déterminé par deux pompes positives (13, 16) qui sont montées de façon à travailler selon une capacité relative constante et qui sont chacune agencées pour contrôler un flux respectif choisi parmi le flux de lait dirigé vers le dispositif de filtration, le flux de lait concentré obtenu de l'appareil de filtration et le flux de perméat obtenu de l'appareil de filtration.

2. Procédé selon la revendication 1, dans lequel la capacité desdites deux pompes positives (13, 16) est réglée en rapport avec le flux de lait produit par la traite, la capacité de l'une ou des unités de filtration à membrane étant réglée en conséquence du fait de la pression d'entraînement des deux côtés de la membrane de filtration qui dépend de la capacité des pompes.

3. Installation de traite comprenant un appareil de filtration à membrane comportant au moins une unité de filtration (11) avec un espace à perméat (3) et un espace à concentré (2) séparés par une membrane (4), une entrée (8) dans l'espace à concentré pour un flux de lait à concentrer, une sortie (5) de l'espace à concentré pour un flux de lait concentré, un tuyau de circulation (6) reliant ladite sortie (5) à ladite entrée (8) de l'espace à concentré (2), une sortie (9) partant de l'espace à perméat (3) pour un flux de perméat, et une pompe de circulation (7) dans ledit tuyau de circulation, caractérisée en ce que sont prévues deux pompes positives (13, 16), chaque pompe étant aménagée de façon à contrôler un flux respectif choisi parmi le flux de lait à concentrer envoyé à l'appareil de filtration à membrane, le flux de lait concentré provenant de l'appareil de filtration et le flux de perméat provenant de l'appareil de filtration, les deux pompes positives (13, 16) comportant un système d'entraînement commun (17) de manière que les pompes travaillent selon une capacité relative constante, et ledit système d'entraînement commun (17) étant agencé pour être réglé en fonction du flux de lait (10) produit par la traite, la capacité de la ou des unité de filtration (1) étant ajustée par la pression sur les deux côtés de la membrane (2) qui dépend de la capacité desdites pompes (13, 16).

4. Installation selon la revendication 3, dans laquelle l'une desdites pompes positives (13) est agencée pour contrôler le flux de lait allant à l'appareil de filtration à membrane, l'autre pompe positive (16) est agencée pour contrôler le flux de perméat provenant de l'appareil de filtration, et une soupape de commande de pression (19) est disposée dans une sortie de concentré de lait (18) pour ouvrir ladite sortie quand le concentré de lait atteint une certaine pression.

5. Installation selon la revendication 4, dans laquelle un moyen de détection de pression (20) est prévu pour détecter la pression dans l'espace à perméat (3) de l'unité ou de chaque unité de filtration pour être certain que la capacité maximale de l'unité de filtration n'est pas dépassée.

6. Installation selon la revendication 4, dans laquelle la sortie (9) de l'espace à perméat (3) de ladite ou desdites unités de filtration est reliée par un moyen à soupape (22) à un récipient (23) comprenant un détecteur de niveau (24) prévu pour commander l'ouverture et la fermeture dudit moyen à soupape (22), et ladite autre pompe positive (16) qui contrôle le flux de perméat est agencée de façon à évacuer de façon continue le perméat dudit récipient (23).

7. Installation selon la revendication 6, dans laquelle ledit récipient (23) est muni d'un détecteur de niveau (24) prévu pour commander ledit système d'entraînement commun (17) et réduire la capacité des pompes positives (13, 16) quand le perméat dans le récipient (23) est au-dessous d'un certain niveau.

8. Installation selon la revendication 3, dans laquelle l'une des pompes positives (26) contrôle le flux de lait à concentrer vers l'appareil de filtration, l'autre pompe positive (27) contrôle le flux de lait concentré provenant de l'appareil de filtration, et un moyen de détection de pression (29) est prévu pour détecter la pression du concentré de lait dans l'appareil de filtration pour être certain que la capacité maximale de l'unité de filtration (1) ou de chaque unité de filtration ne soit pas dépassée.

9. Installation selon la revendication 3, dans laquelle l'une des pompes positives (26) contrôle le flux de lait à concentrer allant à l'appareil de filtration, l'autre pompe (27) contrôle le flux de lait concentré provenant de l'appareil de filtration, une sortie pour le concentré de lait est reliée par un moyen à soupape (31) à un récipient (32) comprenant un détecteur de niveau (33) prévu pour commander l'ouverture et la fermeture dudit moyen à soupape (31), et ladite autre pompe positive (27) qui contrôle le concentré de lait est prévue pour évacuer de façon continue le concentré de lait dudit récipient (32).

## Fig. 1

## Fig. 2

## Fig. 3

## Fig. 4

## Fig.5

## Fig.6